# EUROPÄISCHE PATENTANMELDUNG

(11) **EP 3 736 140 A1**
(43) Veröffentlichungstag der Anmeldung: **11.11.2020**
(21) Anmeldenummer: 20162604.1
(22) Anmeldetag: 12.03.2020
(51) Int. Cl.: B60C 9/04, B60C 9/20, B60C 15/00

(54) **VERSTÄRKUNGSLAGE IN EINEM FAHRZEUGLUFTREIFEN RADIALER BAUART UND FAHRZEUGLUFTREIFEN**

(30) Priorität: 10.05.2019 DE 102019206791
(71) Anmelder: Continental Reifen Deutschland GmbH, 30165 Hannover (DE)
(72) Erfinder: Biabanaki, Seyedomidreza, 30419 Hannover (DE)
(74) Vertreter: Finger, Karsten

(57) **Zusammenfassung**

Verstärkungslage (1, 1') in einem Fahrzeugluftreifen radialer Bauart, aus in Gummimaterial eingebetteten, parallel zueinander verlaufenden Festigkeitsträgern (2, 2') und mit zwei Randkanten (3, 3'), an welchen die Festigkeitsträger (2, 2') enden.

Die Randkanten (3, 3') verlaufen in der Ebene der Endabschnitte der Festigkeitsträger (2, 2') entlang einer gleichmäßigen Wellenform.

## Beschreibung

Die Erfindung betrifft eine Verstärkungslage in einem Fahrzeugluftreifen radialer Bauart, aus in Gummimaterial eingebetteten, parallel zueinander verlaufenden Festigkeitsträgern und mit zwei Randkanten, an welchen die Festigkeitsträger enden.

Derartige Verstärkungslagen sind beispielsweise Gürtellagen im Gürtel von Fahrzeugluftreifen radialer Bauart, etwa die Arbeitslagen im Gürtel von Nutzfahrzeugreifen. Ein Nutzfahrzeugreifen mit einem vierlagigen Gürtel mit zwei Arbeitslagen ist beispielsweise aus der DE 10 2005 057 823 A1 bekannt.

An den in Umfangsrichtung umlaufenden Randkanten der Verstärkungslagen befinden sich die Enden der Festigkeitsträger, insbesondere Stahlkorde, wenn es sich um Gürtellagen oder um Karkasslagen in Nutzfahrzeugreifen handelt. Beim Betrieb der Reifen, dem Abrollen der Reifen unter Last, unterliegen gerade die Randkantenbereiche und damit die Enden der Festigkeitsträger Belastungen, die ein Ablösen der Festigkeitsträgerenden vom umgebenden Gummimaterial, dadurch das Entstehen von Einrissen im Gummi und in weiterer Folge eine Rissausbreitung zur Folge haben können, wodurch die Haltbarkeit der Reifen beeinträchtigt wird. Das Auftreten dieser negativen Effekte steht auch im Zusammenhang mit der Dichte der Festigkeitsträger, je größer die Dichte umso eher bzw. früher treten die erwähnten Schäden auf. Die Dichte kann jedoch, um weitere Reifeneigenschaften, wie die Laufleistung, die Belastbarkeit und dergleichen nicht zu beeinträchtigen, nicht beliebig herabgesetzt werden.

Der Erfindung liegt somit die Aufgabe zugrunde, Festigkeitsträgerlagen derart zu gestalten, dass bei gleichbleibender Dichte der Festigkeitsträger ein Auftreten der erwähnten negativen Effekte, insbesondere eine Rissausbreitung, zumindest verzögert werden kann.

Gelöst wird die gestellte Aufgabe erfindungsgemäß dadurch, dass die Randkanten der Verstärkungslage in der Ebene der Endabschnitte der Festigkeitsträger entlang einer gleichmäßigen Wellenform verlaufen.

Die Wellenform der Randkanten bringt mit sich, dass sich die an den Randkanten befindlichen Enden der Festigkeitsträger nicht mehr in der gleichen axialen Position über den Reifenumfang befinden, wie es bei üblichen Verstärkungslagen der Fall ist, sondern in axialer Richtung gegeneinander versetzt sind. Sollten beim Betrieb des Reifens im Bereich der Festigkeitsträgerenden Risse im Gummi entstehen so wird eine Rissausbreitung von einem Festigkeitsträger zum benachbarten deutlich verzögert.

Bevorzugt sind Ausführungsformen der Verstärkungslage, bei welchen die Wellenform der Randkanten eine konstante Amplitude, welche 5,0 mm bis 15,0 mm beträgt, sowie eine konstante Wellenlänge, welche 2,5 mm bis 25,0 mm beträgt, aufweist. Die tatsächliche Größe der Amplitude und der Wellenlänge werden insbesondere in Abstimmung mit der Konstruktion der Festigkeitsträger und deren Dichte in der Verstärkungslage entsprechend gewählt.

Bei bevorzugten Ausführungsformen ist die Verstärkungslage eine Gürtellage im Gürtel oder eine Karkasslage in der Karkasseinlage des Fahrzeugluftreifens.

Die Erfindung betrifft ferner einen Fahrzeugluftreifen radialer Bauart, insbesondere einen Nutzfahrzeugreifen, welcher einen Gürtel mit zwei Gürtellagen mit Festigkeitsträgern enthält, welcher unter einem spitzen Winkel zur Umfangsrichtung verlaufen, wobei die Festigkeitsträger in der einen Gürtellage die Festigkeitsträger in der anderen Gürtellage kreuzen. Die beiden Gürtellagen sind als Verstärkungslagen gemäß der Erfindung ausgeführt.

Bevorzugt weisen die Randkanten der beiden Gürtellagen Wellenformen mit übereinstimmenden Wellenlängen auf, wobei die Wellenform der Randkanten der einen Gürtellagen gegenüber der Wellenform der Randkanten der anderen Gürtellage um eine halbe Wellenlänge versetzt ist. Diese Maßnahme ist für eine gleichmäßige Abstützung der Schulterbereiche und für eine effektive Verzögerung der Ausbreitung von etwaigen entstehenden Rissen von Vorteil.

Desweiteren betrifft die Erfindung einen Fahrzeugluftreifen radialer Bauart, insbesondere Nutzfahrzeugreifen, welcher zumindest eine Karkasslage mit Festigkeitsträgern enthält, welche eine gemäß der Erfindung ausgeführte Verstärkungslage ist.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 einen Umfangsabschnitt einer Gürtellage eines Fahrzeugluftreifens,
Fig. 2 einen Umfangsabschnitt von zwei übereinander positionierten Gürtellagen eines Gürtelverbandes eines Fahrzeugluftreifens und
Fig. 3 eine Ansicht eines Schneidmessers.

Die Erfindung befasst sich mit der Ausgestaltung von Verstärkungslagen, insbesondere Gürtellagen oder Karkasslagen, in Fahrzeugluftreifen radialer Bauart, insbesondere in Nutzfahrzeugreifen.

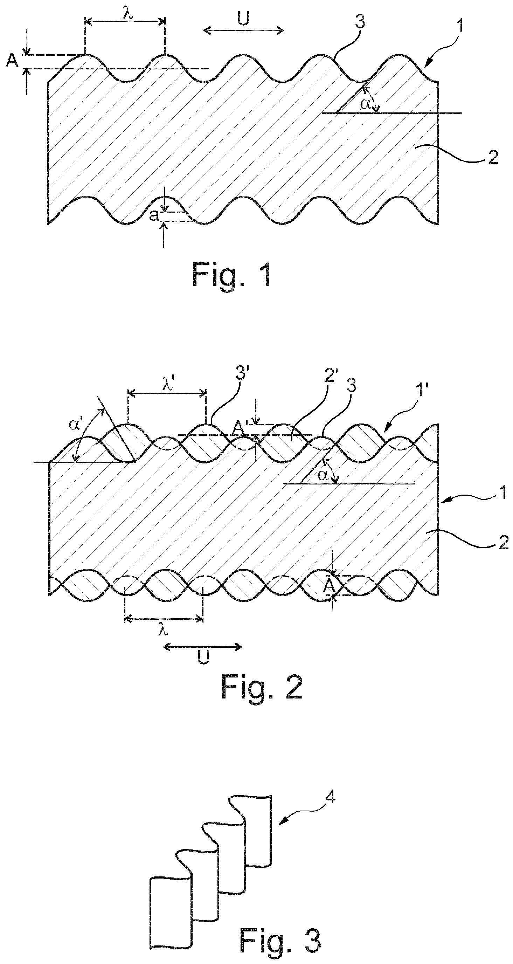

Fig. 1 zeigt eine Draufsicht auf einen Umfangsabschnitt einer Gürtellage 1, die beispielsweise eine der Arbeitslagen im Gürtelverband eines Nutzfahrzeugreifens ist. Nutzfahrzeugreifen weisen einen mehrlagigen Gürtelverband mit beispielsweise vier Gürtellagen auf, welche Festigkeitsträger enthalten, die innerhalb der Gürtellagen parallel zueinander verlaufen. Die beiden mittleren Gürtellagen, die zweite und die dritte Gürtellage, sind die Arbeitslagen, deren Festigkeitsträger 2, insbesondere Stahlkorde, unter einem üblichen Winkel α zur Umfangsrichtung (Doppelpfeil U in Fig. 1) verlaufen, wobei die Festigkeitsträger in der einen Arbeitslage die Festigkeitsträger in der anderen Arbeitslage kreuzen. In sämtlichen Gürtellagen sind die Festigkeitsträger in eine Gummimischung, die Gürtelgummierung, eingebettet.

Die in Fig. 1 beispielhaft gezeigte Gürtellage 1 weist zwei seitliche Randkanten 3 auf, welche in axialer Richtung, in der Gürtellagenfläche, gleichmäßig wellenförmig, beispielsweise sinusförmig oder gemäß einer sonstigen Wellenform, mit einer konstanten Amplitude A und einer konstanten Wellenlänge λ verlaufen. Die Amplitude A beträgt 5,0 mm bis 15,0 mm, die Wellenlänge λ 2,5 mm bis 25,0 mm, je nach Art der Konstruktion der Festigkeitsträger 2 in der Gürtellage 1, ihrer gewählten Dichte und der Größe des Winkels α. Bei Festigkeitsträgern 2, etwa Stahlkorden, größeren Durchmessers und/oder geringerer Dichte sind die Amplitude A und Wellenlänge λ im oberen Bereich der angegebenen Intervalle. Die Wellenform an der einen Randkante 3 kann gegenüber der Wellenform an der anderen Randkante 3 in Umfangsrichtung versetzt sein. Die Wellenform kann ferner derart sein, dass die Wellenberge bzw. Wellentäler unterschiedlich lange Flankenabschnitte aufweisen.

Die an den Randkanten 3 befindlichen Enden einander benachbarter Festigkeitsträger 2 weisen in Folge der Wellenform der Randkanten 3 in axialer Richtung einen gegenseitigen Abstand a auf. Der gegenseitige axiale Abstand a der Enden der Festigkeitsträger 2 verzögert eine Rissausbreitung an den diesbezüglich kritischen Randkantenbereichen von Gürtellagen.

Fig. 2 zeigt eine Draufsicht auf einen Umfangsabschnitt von zwei übereinander positionierten Gürtellagen 1, 1', welche beispielsweise die beiden Arbeitslagen im Gürtelverband eines Nutzfahrzeugreifens sind. Die eine Gürtellage, die Gürtellage 1 entspricht von ihrer Ausführung jener gemäß Fig. 1, die zweite Gürtellage 1' ist etwas breiter ausgeführt als die Gürtellage 1 und entspricht ansonsten ebenfalls der Gürtellage 1 der Fig. 1 mit dem Unterschied, dass sie mit Festigkeitsträgern 2' verstärkt ist, welche zu den Festigkeitsträgern 2 der Gürtellage 1 gekreuzt und unter einem Winkel α' relativ zur Umfangsrichtung U verlaufen. Der Winkel α' kann, muss jedoch nicht, dem Winkel α entsprechen. Auch die Gürtellage l' weist Randkanten 3' auf, die entlang einer gleichmäßigen Wellenform mit einer Amplitude A' und einer Wellenlänge λ' verlaufen. Die Größe der Amplitude A' wird in dem oben erwähnten Bereich gewählt und kann der Amplitude A entsprechen. Die Wellenlänge λ' entspricht der Wellenlänge λ an den Randkanten 3 der Gürtellage 1, wobei die Wellenform der Randkanten 3' gegenüber der Wellenform der Randkanten 3 um eine halbe Wellenlänge λ, λ' versetzt ist.

Eine weitere Verstärkungslage in Fahrzeugluftreifen, insbesondere Nutzfahrzeugreifen, die mit wellenförmigen Randkanten versehen sein kann, ist eine Karkasslage. Karkasslagen enthalten weitgehend parallel zueinander verlaufende, in eine Karkassgummierung eingebettete Festigkeitsträger, entweder aus einem textilen Material oder aus Stahl. Bekannter Weise werden Karkasslagen beim Reifenaufbau um Wulstkerne in den Wulstbereichen des Reifens herumgeschlagen, die umgeschlagenen Abschnitte bilden die sogenannten Karkasshochschläge, die in einem Abstand von den Wulstkernen enden. Die Randkanten der Karkasshochschläge weisen eine gleichmäßige Wellenform auf, deren Amplitude und deren Wellenlänge in den oben erwähnten Bereichen gewählt werden. Durch die Wellenform weisen die Enden einander benachbarter Festigkeitsträger in radialer Richtung gegenseitige Abstände auf.

Verstärkungslagen werden üblicherweise durch Kalandrieren hergestellt, wobei Materialbahnen mit in Bahnlängsrichtung parallel verlaufenden Festigkeitsträger gebildet werden, die in dünne Kautschukmischungsschichten eingebettet sind. Zur Herstellung von Gürtellagen werden Bahnabschnitte unter einem entsprechenden Winkel abgeschnitten, zur Herstellung von Karkasslagen erfolgt der Schnitt quer zu den in Längsrichtung verlaufenden Festigkeitsträgern. Zur Herstellung von wellenförmig verlaufenden Randkanten erfolgt der Schnitt mit einem in entsprechender Wellenform gestalteten Messer 4, wie es schematisch in Fig. 3 dargestellt ist. Das Messer 4 durchtrennt in Einem senkrecht zur Bahnoberfläche die kalandrierte Materialbahn.

### Bezugsziffernliste

- 1, 1': Gürtellage
- 2, 2': Festigkeitsträger
- 3, 3': Randkante
- 4: Messer
- α, α': Winkel
- A, A': Amplitude
- a: Abstand
- λ, λ': Wellenlänge
- U: Umfangsrichtung

## Patentansprüche

1. Verstärkungslage (1, 1') in einem Fahrzeugluftreifen radialer Bauart, aus in Gummimaterial eingebetteten, parallel zueinander verlaufenden Festigkeitsträgern (2, 2') und mit zwei Randkanten (3, 3'), an welchen die Festigkeitsträger (2, 2') enden,
**dadurch gekennzeichnet,**
**dass** die Randkanten (3, 3') in der Ebene der Endabschnitte der Festigkeitsträger (2, 2') entlang einer gleichmäßigen Wellenform verlaufen.

2. Verstärkungslage (1, 1') nach Anspruch 1, **dadurch gekennzeichnet, dass** die Wellenform der Randkanten (3, 3') eine konstante Amplitude (A, A') aufweist, welche 5,0 mm bis 15,0 mm beträgt.

3. Verstärkungslage (1, 1') nach Anspruch 1 oder 2, **dadurch gekennzeichnet, dass** die Wellenform der Randkanten (3, 3') eine konstante Wellenlänge (λ, λ') aufweist, welche 2,5 mm bis 25,0 mm beträgt.

4. Verstärkungslage (1, 1') nach einem der Ansprüche 1 bis 3, **dadurch gekennzeichnet, dass** sie eine Gürtellage (1, 1') im Gürtel des Fahrzeugluftreifens ist.

5. Verstärkungslage (1, 1') nach einem der Ansprüche 1 bis 3, **dadurch gekennzeichnet, dass** sie eine Karkasslage im Fahrzeugluftreifen ist.

6. Fahrzeugluftreifen radialer Bauart, insbesondere Nutzfahrzeugreifen, welcher einen Gürtel mit zwei Gürtellagen mit Festigkeitsträgern (2, 2') enthält, welche unter einem spitzen Winkel (α, α') zur Umfangsrichtung verlaufen, wobei die Festigkeitsträger (2, 2') in der einen Gürtellage die Festigkeitsträger in der anderen Gürtellage kreuzen, **dadurch gekennzeichnet, dass** die Gürtellagen Verstärkungslagen nach einem oder mehreren der Ansprüche 1 bis 3 sind.

7. Fahrzeugluftreifen nach Anspruch 6, **dadurch gekennzeichnet, dass** die Randkanten (3, 3') der beiden Gürtellagen Wellenformen mit übereinstimmenden Wellenlängen (λ, λ') aufweisen, wobei die Wellenform der Randkanten (3) der einen Gürtellage gegenüber der Wellenform der Randkanten (3') der anderen Gürtellage um eine halbe Wellenlänge versetzt ist.

8. Fahrzeugluftreifen radialer Bauart, insbesondere Nutzfahrzeugreifen, welcher zumindest eine Karkasslage mit Festigkeitsträgern enthält, **dadurch gekennzeichnet, dass** die Karkasslage eine Verstärkungslage nach einem oder mehreren der Ansprüche 1 bis 3 ist.
